(19)

**Europäisches Patentamt**
**European Patent Office**
**Office européen des brevets**

(11) **EP 3 425 866 A1**

(12) **EUROPEAN PATENT APPLICATION**

(43) Date of publication:
**09.01.2019 Bulletin 2019/02**

(51) Int Cl.:
**H04L 29/06** *(2006.01)*   **G05B 19/042** *(2006.01)*

(21) Application number: **17179977.8**

(22) Date of filing: **06.07.2017**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(71) Applicant: **Siemens Aktiengesellschaft
80333 München (DE)**

(72) Inventors:
• **Caselli, Marco
80336 München (DE)**
• **Gasiba, Tiago
81549 München (DE)**

Remarks:
Amended claims in accordance with Rule 137(2)
EPC.

(54) **DETECTING AN UNDEFINED ACTION IN AN INDUSTRIAL SYSTEM**

(57)     It is suggested introducing a separation into modes for an industrial control system, wherein a training of a model is conducted for each of the modes and an undefined action is detected by monitoring the industrial system within the respective mode.

FIG 4

EP 3 425 866 A1

**Description**

The invention relates to an approach to detect an undefined, in particular an malicious, action (e.g., state or transition) in an industrial system.

It is an object of the invention to improve the detection of undefined actions that occur in the industrial system and hence to reduce the number of false alarms.

This problem is solved according to the features of the independent claims. Further embodiments result from the depending claims.

In order to overcome the problem, a method is provided for detecting an undefined action in an industrial system, the method comprising:

(a) determining a system model for each operating mode, wherein the industrial system comprises at least two operating modes;
(b) detecting the undefined action in the system model depending on the applicable operating mode.

Hence, in the step (a) an individual system model is determined during a training phase for each of the operating modes. In the step (b) the training is (at least temporarily) concluded and a specific system model for the respective operating mode is applied to determine whether an undefined action occurred.

The training is used to detect benign states of the respective system model (per operating mode); if during normal operation (i.e. after the training) a state or a transition of a state is detected that has not occurred during the training, this may correspond to an undefined action. It may in particular be a malicious activity that is subject to an alarm or an alarm notification.

The undefined action may be a state or a transition between states of the industrial system.

In an embodiment, the method comprises prior to step (a):

-   identifying the at least two operating modes of the industrial system.

In an embodiment, step (a) further comprises:

-   determining the system model via machine learning and/or parameter extraction during a training phase.

In an embodiment, step (b) further comprises:

-   detecting the undefined action during a second phase, which is different from the training phase.

In an embodiment, the at least two different operating modes are based on at least one of the following:

-   different parameters;
-   different time-of-day;
-   different switch positions;
-   different login events;
-   different weather conditions;
-   different sensor values;
-   different temperature conditions.

In an embodiment, the industrial system is an industrial control system.

In an embodiment, a predetermined action is initiated in case the undefined action has been detected.

In an embodiment, the predetermined action comprises at least one of the following:

-   issuing an alarm;
-   issuing an alarm notification;
-   changing the state of the industrial system;
-   triggering a repair measure.

In an embodiment, the undefined action is a malicious activity within the industrial system.

Also, a device is provided for detecting an undefined action in an industrial system, wherein the device comprises a processing unit that is arranged to

(a) determine a system model for each operating mode, wherein the industrial system comprises at least two operating modes;
(b) detect the undefined action in the system model depending on the applicable operating mode.

In an embodiment, the processing unit is further arranged to identify prior to step (a) the at least two operating modes of the industrial system.

Further, an industrial system is suggested comprising a processing unit that is arranged to

(a) determine a system model for each operating mode, wherein the industrial system comprises at least two operating modes;
(b) detect an undefined action in the system model depending on the applicable operating mode.

In an embodiment, the processing unit is further arranged to identify prior to step (a) the at least two operating modes of the industrial system.

It is noted that the steps of the method stated herein may be executable/executed on this processing unit as well.

It is further noted that said processing unit can comprise at least one, in particular several means that are arranged to execute the steps of the method described herein. The means may be logically or physically separated; in particular several logically separate means could be combined in at least one physical unit.

Said processing unit may comprise at least one of the following: a processor, a microcontroller, a hard-wired circuit, an ASIC, an FPGA, a logic device.

The solution provided herein further comprises a computer program product directly loadable into a memory of a digital computer, comprising software code portions for performing the steps of the method as described herein.

In addition, the problem stated above is solved by a computer-readable medium, e.g., storage of any kind, having computer-executable instructions adapted to cause a computer system to perform the method as described herein.

The aforementioned characteristics, features and advantages of the invention as well as the way they are achieved will be further illustrated in connection with the following examples and considerations as discussed in view of the figures.

Fig. 1     shows a general overview of ICS also referred to as the Purdue Reference Model (PRM);

Fig.2      shows an overview of a setup of a generic industrial control system, which comprises an enterprise zone, a DMZ and a process zone;

Fig.3      shows a diagram visualizing a modelled communication observed in an industrial control system;

Fig. 4     shows a diagram comprising two exemplary operating modes S1, S2; and

Fig.5      shows an exemplary parameter extraction for the maintenance mode S2.

Examples described herein in particular refer to an efficient approach to perform malicious activity detection in industrial control systems.

It is beneficial that industrial control systems (ICS) are relatively static in nature allowing communication between involved devices to be modeled. It is also an advantage that not only an individual communication between devices (i.e. which device is communicating with which other device) but also protocol characteristics can be modeled in order to perform the malicious activity detection.

It is one motivation to detect such malicious activities with an increased certainty and hence to further reduce false-positives, e.g., false alarms. Hence, the approach presented in particular allows reducing the maintenance costs of such industrial control systems.

Intrusion detection on industrial control systems has been solved using two different alternatives:

- Host-based Intrusion Detection Systems (HIDS) and
- Network-based Intrusion Detection Systems (NIDS).

Due to the existence of many devices containing non-standardized operating systems, embedded systems, low-power devices and devices without special intelligence in the ICS world, the HIDS approach is generally not applicable as is described in [1].

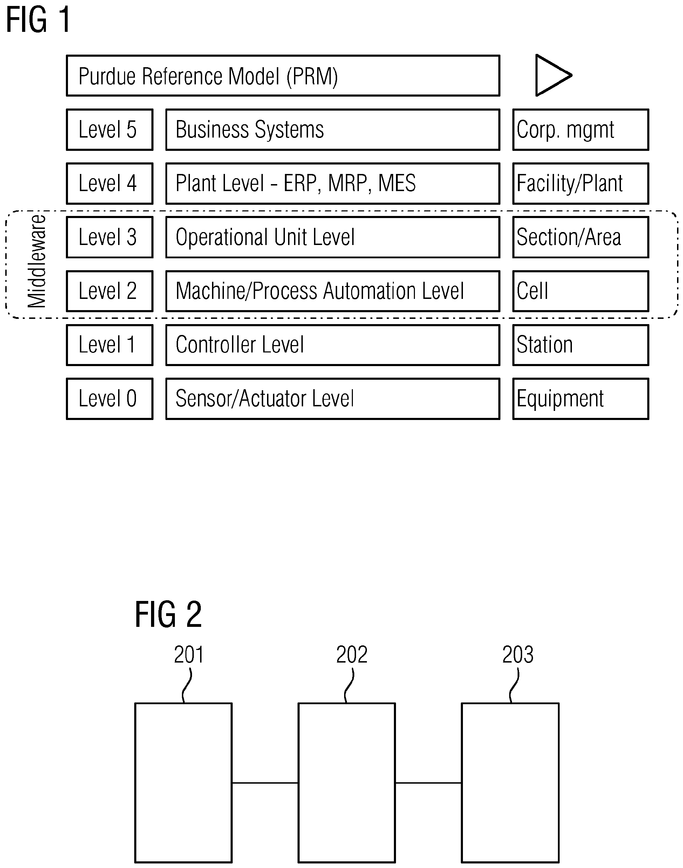

Fig.1 shows a general overview of ICS levels as described in [6], also referred to as the Purdue Reference Model (PRM). On the higher levels, standard equipment is used, whereas for the lower levels more operational technology (OT) specific or proprietary equipment is found, like, e.g., sensors, programmable logic controllers (PLC), human-machine interfaces (HMI).

Fig.2 shows in a simplified version of Fig.1 depicting an overview of a setup of a generic industrial control system, which comprises an enterprise zone 201, a DMZ 202 (DMZ: demilitarized zone) and a process zone 203.

In the enterprise zone 201 there are standard IT systems and computers. In the DMZ 202 there are firewalls and data historians. The process zone 203, however, makes an ICS special: Here are embedded devices, PLCs, HMIs, etc. Also, in the process zone 203 special ICS communications protocols exist, e.g., ModBus, ProfiNet, etc.

Hence, for the enterprise zone 201 and the DMZ 202 standard off-the-shelf solutions exist for security monitoring (HIDS and NIDS). This, however is different for the process zone 203 where only proprietary ICS-specific security monitoring tools exist.

It is a disadvantage that existing off-the-shelf solutions rely on signatures to perform detection. This is oftentimes not applicable for industrial control systems, because there are no such signatures for cyberattacks concerning OT-specific or proprietary equipment (see also [2]).

In [3] an approach is described which addresses the peculiarities of industrial control systems in order to develop detection technology which is not signature-based but behavior-based. Further, [4] and [5] refer to the feasibility of modeling ICS network traffic.

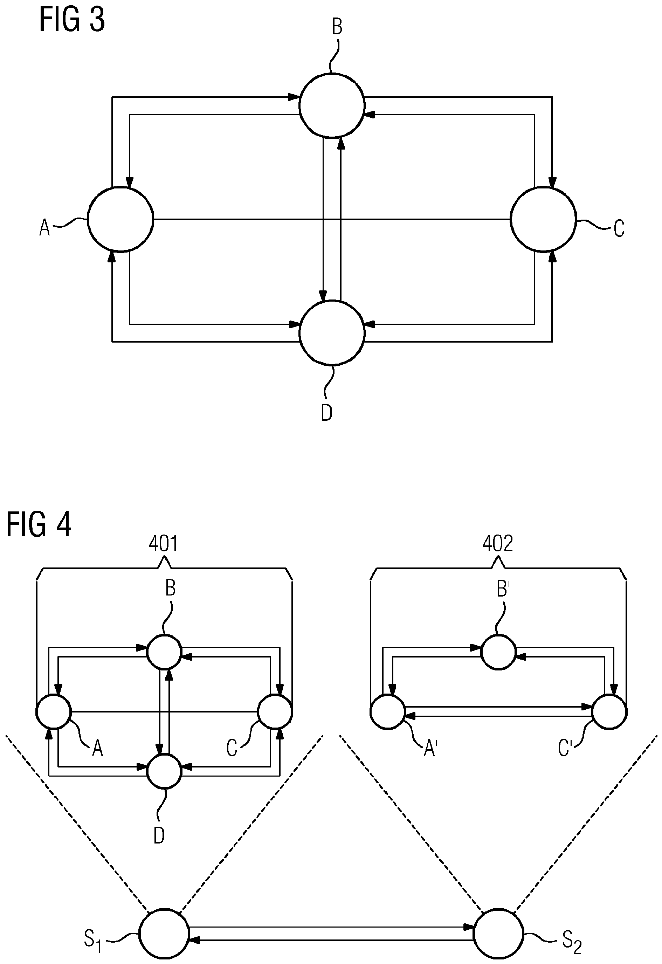

Fig.3 shows a diagram visualizing a modelled communication observed in an industrial control system. The model comprises four states A, B, C and D, which may be determined by observing benign traffic and using modeling techniques like, e.g., discrete-time Markov chains. Transitions between states, e.g., A->B, can be assigned a probability p(A->B). Such transitions may depend on system modeling parameters, e.g., a communication between a machine M1 and a machine M2, a message type in a ModBus packet header, a type of protocol used for communication or the like.

After a learning phase used for obtaining the system model, the monitoring can be started. In this monitoring phase, all the system transitions may be tracked. The detection is based on the assumption that a security alert is issued if the system behavior deviates from the results tracked during the learning phase, i.e. from the system model. This type of alert may be adjusted for security-relevance, but (in addition or as an alternative) it may also be adjusted to monitor the system and issue an alert based on unusual behavior which might be safety-relevant.

Due to the nature of the industrial processes and other additional factors, this type of monitoring can still result in a significant number of false-positives, i.e. security alerts that are issued while the system is running properly.

In the approach presented herein, the system modeling and characterization is further improved to reduce the probability of false-positives, e.g., false alarms.

One reason for providing false-positives in existing solutions is based on the fact that a state-transition appears to be unexpected although the system is operating normally. A reason for that is that the modeling of the state-transitions is highly dependent on (and thus sensitive to) the learning phase which serves as an input to the system model.

It is thus suggested to introduce a separation into modes for the industrial control system. These modes for the industrial control system to operate in are taken into account during system modeling.

For example, the following modes (also referred to as operating modes) may be differentiated:

- Normal Operation: e.g. when the ICS is running in a default mode;
- Slow Operation: e.g. when the ICS is running at a percentage less than 100% of its capacity;
- Accelerated Operation: e.g. when the ICS is running at a percentage of more than 100% of its capacity;
- Secure Shutdown: e.g. when the ICS is being brought to a shutdown state;
- Maintenance: e.g. when patches are being applied to the ICS, e.g. security patches or new firmware;
- Shutdown: e.g. when the ICS should not be used for production;
- Supporting Mode: e.g. when the ICS should not be used for production but nevertheless some parts should still be operational (e.g. stirring up some mixture or maintaining an oven temperature).

When identifying the different ICS operating modes, different models may be determined in particular based on a standard model as explained above.

Hence, a separation of models may be applied, each model for one operating mode. This may be achieved by conducting the following steps:

(1) identify the operating modes (S1, S2, ..., Sn);

(2) for each operating mode Sk, a machine learning and a parameter extraction of model parameters is conducted;

(3) a detection algorithm corresponding to the operating mode Sk is executed.

Different operating modes could result from different parameters, e.g. time-of-day, switch position, login events, logout events, weather conditions, temperature conditions, etc.

This approach results in an improved security detection modeling algorithm. Hence, modeling and detection each is done for each individual operating mode. This allows significantly reducing the probability of false-positives, which hence increases the reliability of system and reduces its operating costs.

Thus, different operating modes of the industrial control system are used to extract and use different detection models.

In a first step, instead of performing machine learning algorithms and parameter extraction for the whole industrial control system without considering its respective operating modes, an operating mode specific approach is executed. This results in different models, wherein each model corresponds to an operating mode of the industrial control system. The number of states, state transitions, etc. may be different for each operating mode-specific model.

In a second step, system monitoring is conducted separately for each operating mode, i.e. for each previously determined operating mode-specific model. This results in alarms being generated which are highly dependent on the particular operating mode-specific model.

Fig.4 shows a diagram comprising two exemplary operating modes S1, S2, wherein in operating mode S1 the model 401 applies comprising four states A, B, C and D with specific state transitions. In the operating mode S2, the model 402 applies comprising only three stages A', B' and C' with specific state transitions. The model 402 is different from the model 401.


Exemplary Embodiment:


In an exemplary scenario, an industrial system may have two different operating modes, a normal operating mode S1 and a maintenance mode S2 (see Fig.4).

The system may enter the maintenance mode S2 when an operator connects to a maintenance mainframe machine or, e.g., when a switch is put into a maintenance mode position.

In the normal operating mode S1, there is a programmable logic controller (PLC) which controls an engine to switch to position 1, then position 2, then position 3, then position 4 and finally returns back to position 1.

As an example, in the maintenance mode S2, a light may be turned off, green or red. The light is also controlled by the same PLC.

The parameter extraction for the normal operating mode S1 results in a detection model as shown in Fig.3, wherein A corresponds to the position 1, B corresponds to the position 2, C corresponds to the position 3 and D corresponds to the position 4. The probability p for a transition to occur is determined by a value "0" (equal to 0%) and a value "1" (equal to 100%) :

$$p(A\text{->}A) = 0, \; p(A\text{->}B) = 1, \; p(A\text{->}C) = 0, \; p(A\text{->}D) = 0$$

$$p(B\text{->}A) = 0, \; p(B\text{->}B) = 0, \; p(B\text{->}C) = 1, \; p(B\text{->}D) = 0$$

$$p(C\text{->}A) = 0, \; p(C\text{->}B) = 0, \; p(C\text{->}C) = 0, \; p(C\text{->}D) = 1$$

$$p(D\text{->}A) = 1, \; p(D\text{->}B) = 0, \; p(D\text{->}C) = 0, \; p(D\text{->}D) = 0$$

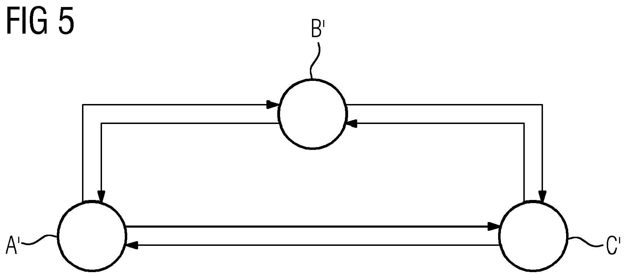

The parameter extraction for the maintenance mode S2 results in a detection model as shown in Fig.5, wherein A' corresponds to "light OFF", B' corresponds to "light is GREEN" and C' corresponds to "light is RED":

$$p(A'\text{->}A') = 0, \quad p(A'\text{->}B') = 0.5, \; p(A'\text{->}C') = 0.5$$

$$p(B'\text{->}A') = 1, \quad p(B'\text{->}B') = 0, \quad p(B'\text{->}C') = 0$$

$$p(C'\text{->}A') = 0.9, \; p(C'\text{->}B') = 0.1, \; p(C'\text{->}C') = 0$$

Hence, the light being OFF can be turned either GREEN or RED with a probability amounting to 50%. The GREEN light can only be turned OFF. The RED light can be turned OFF with a probability of 90% or the RED light can be turned GREEN with a probability of 10%. In the normal operating mode S1 the light is turned OFF.

During monitoring, security anomalies are detected by inspecting the communication of the PLC with the corresponding actuators. A communication that falls outside the model for the given operating mode generates an alert. A security level of this alert may depend on the operating mode itself.

Although the invention is described in detail by the embodiments above, it is noted that the invention is not at all limited to such embodiments. In particular, alternatives can be derived by a person skilled in the art from the exemplary embodiments and the illustrations without exceeding the scope of this invention.

References

[1] Keith Stouffer, et al.: "Guide to Industrial Control Systems (ICS) Security, Supervisory Control and Data Acquisition (SCADA) systems, Distributed Control Systems (DCS), and other control system configurations such as Programmable Logic Controllers (PLC)", NIST Special Publication 800-82, Revision 2, May 2015, http://dx.doi.org/10.6028/NIST.SP.800-82r2.

[2] "Control Systems Cyber Security: Defense in Depth Strategies", External Report # INL/EXT-06-11478, May 2006.

[3] D. Hadžiosmanovic, et al.: "'Through the eye of the PLC: Semantic Security Monitoring for Industrial Processes", Proceedings of the 30th Annual Computer Security Applications Conference, ACM, 2014.

[4] M. Caselli, et al.: " MODELING MESSAGE SEQUENCES FOR INTRUSION DETECTION IN INDUSTRIAL CONTROL SYSTEMS", International Conference on Critical Infrastructure Protection, Springer International Publishing, 2015.

[5] M. Caselli, et al.: " Sequence-aware Intrusion Detection in Industrial Control Systems", Proceedings of the 1st ACM Workshop on Cyber-Physical System Security, ACM, 2015.

[6] J. Schekkerman: "How to Survive in the Jungle of Enterprise Architecture Frameworks: Creating or Choosing an Enterprise Architecture Framework", 2004, p.91-118, ISBN-13: 978-1412016070.

**Claims**

1. Method for detecting an undefined action in an industrial system, the method comprising:

    (a) determining a system model for each operating mode, wherein the industrial system comprises at least two operating modes;
    (b) detecting the undefined action in the system model depending on the applicable operating mode.

2. The method according to claim 1, comprising prior to step (a):

    - identifying the at least two operating modes of the industrial system.

3. The method according to any of the preceding claims, wherein step (a) further comprises:

    - determining the system model via machine learning and/or parameter extraction during a training phase.

4. The method according claim 3, wherein step (b) further comprises:

    - detecting the undefined action during a second phase, which is different from the training phase.

5. The method according to any of the preceding claims, wherein the at least two different operating modes are based on at least one of the following:

    - different parameters;

- different time-of-day;
- different switch positions;
- different login events;
- different weather conditions;
- different sensor values;
- different temperature conditions.

6. The method according to any of the preceding claims, wherein the industrial system is an industrial control system.

7. The method according to any of the preceding claims, wherein a predetermined action is initiated in case the undefined action has been detected.

8. The method according to claim 7, wherein the predetermined action comprises at least one of the following:

- issuing an alarm;
- issuing an alarm notification;
- changing the state of the industrial system;
- triggering a repair measure.

9. The method according to any of the preceding claims, wherein the undefined action is a malicious activity within the industrial system.

10. A device for detecting an undefined action in an industrial system, wherein the device comprises a processing unit that is arranged to

(a) determine a system model for each operating mode, wherein the industrial system comprises at least two operating modes;
(b) detect the undefined action in the system model depending on the applicable operating mode.

11. The device according to claim 10, wherein the processing unit is further arranged to identify prior to step (a) the at least two operating modes of the industrial system.

12. An industrial system comprising a processing unit that is arranged to

(a) determine a system model for each operating mode, wherein the industrial system comprises at least two operating modes;
(b) detect an undefined action in the system model depending on the applicable operating mode.

13. The device according to claim 12, wherein the processing unit is further arranged to identify prior to step (a) the at least two operating modes of the industrial system.

14. A computer program product directly loadable into a memory of a digital processing device, comprising software code portions for performing the steps of the method according to any of claims 1 to 9.

15. A computer-readable medium having computer-executable instructions adapted to cause a computer system to perform the method according to any of claims 1 to 9.


**Amended claims in accordance with Rule 137(2) EPC.**

1. Method for detecting an undefined action in an industrial system, the method comprising:

(a) determining a system model for each operating mode, wherein the industrial system comprises at least two operating modes and determining the system model via machine learning and/or parameter extraction during a training phase;
(b) detecting the undefined action in the system model depending on the applicable operating mode and detecting the undefined action during a second phase, which is different from the training phase.

**2.** The method according to claim 1, comprising prior to step (a) :

- identifying the at least two operating modes of the industrial system.

**3.** The method according to any of the preceding claims, wherein the at least two different operating modes are based on at least one of the following:

- different parameters;
- different time-of-day;
- different switch positions;
- different login events;
- different weather conditions;
- different sensor values;
- different temperature conditions.

**4.** The method according to any of the preceding claims, wherein the industrial system is an industrial control system.

**5.** The method according to any of the preceding claims, wherein a predetermined action is initiated in case the undefined action has been detected.

**6.** The method according to claim 5, wherein the predetermined action comprises at least one of the following:

- issuing an alarm;
- issuing an alarm notification;
- changing the state of the industrial system;
- triggering a repair measure.

**7.** The method according to any of the preceding claims, wherein the undefined action is a malicious activity within the industrial system.

**8.** A device for detecting an undefined action in an industrial system, wherein the device comprises a processing unit that is arranged to

(a) determine a system model for each operating mode, wherein the industrial system comprises at least two operating modes and to determine the system model via machine learning and/or parameter extraction during a training phase;
(b) detect the undefined action in the system model depending on the applicable operating mode and to detect the undefined action during a second phase, which is different from the training phase.

**9.** The device according to claim 8, wherein the processing unit is further arranged to identify prior to step (a) the at least two operating modes of the industrial system.

**10.** An industrial system comprising a device according to any of claims 8 or 9.

**11.** A computer program product directly loadable into a memory of a digital processing device, comprising software code portions for performing the steps of the method according to any of claims 1 to 7 when the software code is executed by the digital processing device.

**12.** A computer-readable medium having computer-executable instructions adapted to cause a computer system to perform the method according to any of claims 1 to 7.

# FIG 1

| Purdue Reference Model (PRM) | | ▷ |
|---|---|---|
| Level 5 | Business Systems | Corp. mgmt |
| Level 4 | Plant Level - ERP, MRP, MES | Facility/Plant |
| Level 3 | Operational Unit Level | Section/Area |
| Level 2 | Machine/Process Automation Level | Cell |
| Level 1 | Controller Level | Station |
| Level 0 | Sensor/Actuator Level | Equipment |

Middleware

# FIG 2

201       202       203

# FIG 3

# FIG 4

FIG 5

Europäisches
Patentamt

European
Patent Office

Office européen
des brevets

# EUROPEAN SEARCH REPORT

Application Number

EP 17 17 9977

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MARCO CASELLI ET AL: "Sequence-aware Intrusion Detection in Industrial Control Systems", PROCEEDINGS OF THE 1ST ACM WORKSHOP ON CYBER-PHYSICAL SYSTEM SECURITY, CPSS '15, 1 January 2015 (2015-01-01), pages 13-24, XP055433481, New York, New York, USA DOI: 10.1145/2732198.2732200 ISBN: 978-1-4503-3448-8 | 1-15 | INV. H04L29/06 G05B19/042 |
| Y | * page 13 - page 23 * | 1-15 | |
| X | EP 3 133 793 A1 (CYBERX ISRAEL LTD [IL]) 22 February 2017 (2017-02-22) * paragraph [0001] - paragraph [0007] * | 1-15 | |
| Y | WO 2015/104691 A2 (BRIGHTSOURCE IND ISRAEL LTD [IL]) 16 July 2015 (2015-07-16) * page 1 - page 6 * | 1-15 | |
| A | WO 2016/172514 A1 (SIEMENS AG [DE]; SIEMENS CORP [US]) 27 October 2016 (2016-10-27) * the whole document * | 1-15 | TECHNICAL FIELDS SEARCHED (IPC)  H04L G05B |

The present search report has been drawn up for all claims

| Place of search | Date of completion of the search | Examiner |
|---|---|---|
| Munich | 11 December 2017 | Kuntz, Jean-Marc |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 17 17 9977

This annex lists the patent family members relating to the patent documents cited in the above-mentioned European search report.
The members are as contained in the European Patent Office EDP file on
The European Patent Office is in no way liable for these particulars which are merely given for the purpose of information.

11-12-2017

| Patent document cited in search report | | Publication date | Patent family member(s) | | Publication date |
|---|---|---|---|---|---|
| EP 3133793 | A1 | 22-02-2017 | EP<br>JP<br>US | 3133793 A1<br>2017041886 A<br>2017054751 A1 | 22-02-2017<br>23-02-2017<br>23-02-2017 |
| WO 2015104691 | A2 | 16-07-2015 | US<br>WO | 2016330225 A1<br>2015104691 A2 | 10-11-2016<br>16-07-2015 |
| WO 2016172514 | A1 | 27-10-2016 | NONE | | |

EPO FORM P0459

For more details about this annex : see Official Journal of the European Patent Office, No. 12/82

**EP 3 425 866 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KEITH STOUFFER et al.** Guide to Industrial Control Systems (ICS) Security, Supervisory Control and Data Acquisition (SCADA) systems, Distributed Control Systems (DCS), and other control system configurations such as Programmable Logic Controllers (PLC). *NIST Special Publication 800-82, Revision,* 02 May 2015, http://dx.doi.org/10.6028/NIST.SP.800-82r2
- Control Systems Cyber Security: Defense in Depth Strategies. *External Report # INL/EXT-06-11478,* May 2006
- Through the eye of the PLC: Semantic Security Monitoring for Industrial Processes. **D. HADŽIOS-MANOVIC et al.** Proceedings of the 30th Annual Computer Security Applications Conference. ACM, 2014
- MODELING MESSAGE SEQUENCES FOR INTRUSION DETECTION IN INDUSTRIAL CONTROL SYSTEMS. **M. CASELLI et al.** International Conference on Critical Infrastructure Protection. Springer International Publishing, 2015
- Sequence-aware Intrusion Detection in Industrial Control Systems. **M. CASELLI et al.** Proceedings of the 1st ACM Workshop on Cyber-Physical System Security. ACM, 2015
- **J. SCHEKKERMAN.** *How to Survive in the Jungle of Enterprise Architecture Frameworks: Creating or Choosing an Enterprise Architecture Framework,* 2004, ISBN 978-1412016070, 91-118